Europäisches Patentamt

European Patent Office

Office européen des brevets

(19)

(11) Veröffentlichungsnummer: **0 306 633**
**A2**

(12) **EUROPÄISCHE PATENTANMELDUNG**

(21) Anmeldenummer: 88109505.3

(22) Anmeldetag: 15.06.88

(51) Int. Cl.⁴: **H04Q 11/04 , H04Q 1/444 ,**
**H04M 3/56 , H04M 19/02**

(30) Priorität: 09.09.87 DE 3730232

(43) Veröffentlichungstag der Anmeldung:
15.03.89 Patentblatt 89/11

(84) Benannte Vertragsstaaten:
AT BE CH ES FR GB IT LI LU NL SE

(71) Anmelder: **TELENORMA Telefonbau und**
**Normalzeit GmbH**
**Mainzer Landstrasse 128-146**
**D-6000 Frankfurt am Main(DE)**

(72) Erfinder: **Ell, Bernhard, Dipl.-Ing.**
**Lenbachstrasse 96**
**D-6090 Rüsselsheim(DE)**
Erfinder: **Reiss, Roland, Dipl.-Ing.**
**Stettiner Strasse 24b**
**D-6203 Hochheim(DE)**

(54) **Verfahren zum Einspeisen von Hörtönen in bestehende Gesprächsverbindungen bei einer Fernsprechvermittlungsanlage.**

(57) Bei einer digital nach dem Zeitmultiplex-Prinzip durchschaltenden Fernsprechvermittlungsanlage werden von den einer Mischereinrichtung für die Herstellung von Dreier- und Mehrfachkonferenzverbindungen zur Verfügung stehenden Zeitlagen einige fest dafür vergeben, Hörtöne über die Mischereinrichtung gezielt zu einem Teilnehmer zu senden. Entsprechend dem Rhythmus dieser Hörtöne werden die zwischen den einzelnen Tönen vorhandenen Pausen dazu benutzt, über dieselben Zeitlagen gleichartige oder andere Hörtöne mit gleichem Rhythmus in andere Verbindungen einzuspeisen.

EP 0 306 633 A2

# Verfahren zum Einspeisen von Hörtönen in bestehende Gesprächsverbindungen bei einer Fernsprechvermittlungsanlage

Die Erfindung betrifft ein Verfahren zum Einspeisen von Hörtönen in bestehende Gesprächsverbindungen bei einer Fernsprechvermittlungsanlage nach dem Oberbegriff des Patentanspruchs 1.

Aus der DE-OS 32 16 784 ist eine Schaltungsanordnung zum Einspeisen eines Hörtons auf den Sprechweg einer digital nach dem Zeitmultiplex-Prinzip durchschaltenden Fernsprechvermittlungsanlage bekannt. Es handelt sich dabei um eine relativ einfache Schaltungsanordnung, womit durch Zähler und Verknüpfungen aus einem Steuertakt ein Impuls gebildet wird, dessen Wiederholungszeitspanne der Grundfrequenz des Hörtons entspricht. Dieser Impuls wird noch mit einer Verbindungsinformation und einem Rhythmustakt verknüpft und über ein Sendegatter auf eine Sammelschiene gegeben. Dadurch wird anstelle eines Sprachprobenwortes Nullpotential gesendet. Da sich dieser Vorgang in regelmäßiger Folge wiederholt, entsteht ein Hörton mit der vorgegebenen Grundfrequenz. Bei einer derartigen Hörtoneinspeisung ist es nicht möglich, einen Hörton gezielt zu nur einem Teilnehmer zu senden, wobei der andere Teilnehmer diesen Hörton nicht hört. Außerdem ist ein auf diese Weise erzeugter und eingekoppelter Hörton in seiner Qualität nicht zu vergleichen mit einem Hörton, der eine sinusförmige Grundfrequenz hat.

Eine Schaltungsanordnung zum Aufschalten in Zeitmultiplex-Fernmeldevermittlungssystemen ist aus der DE-PS 20 41 604 bekannt. Es handelt sich dabei um eine Mischverstärkeranordnung, für ein nach dem Pulsamplituden-Modulationsprinzip (PAM) durchschaltendes Fernmeldevermittlungssystem. Dabei werden jeweils durch Integration von analogen Abtastproben gewonnene Sprachanteile zweier Teilnehmer in dem jeweiligen Mischverstärker analog addiert und einem dritten Teilnehmer als Amplitudenprobe zugesendet. Auf diese Weise kommt eine Dreier-Konferenzverbindung zustande, wie sie beispielsweise auftritt, wenn in einer Fernsprechnebenstellenanlage vom Bedien- oder Abfrageplatz aus eine Aufschaltung in einem bestehenden Gespräch vorgenommen wird.

Aus der DE-AS 18 03 222 ist ein Verfahren zum Zusammenfassen pulscodierter Nachrichten bekannt. Dabei handelt es sich ebenfalls um das Herstellen einer Dreier-Konferenzverbindung, wobei anstelle einer analogen Additon die digitalisierten Sprachprobenworte zweier Teilnehmer miteinander addiert und einem dritten Teilnehmer zugesendet werden. Um eine Addition durchführen zu können, müssen die Codeworte zuvor linearisiert werden, wenn sie beispielsweise nach einer logarithmischen Kennlinie komprimiert sind. Bei einer auf diese Weise zustande gekommene Dreier-Konferenzverbindung sind die daran beteiligten Teilnehmer wie zuvor beschrieben so miteinander verbunden, daß jeder sprechen kann und die beiden anderen Teilnehmer hören kann. Es ist unter diesen einfachen Voraussetzungen nicht ohne weiteres möglich, daß zusätzlich Hörtöne eingekoppelt werden können und/oder daß diese Hörtöne einem Teilnehmer allein gezielt angeboten werden können.

Die Aufgabe der Erfindung besteht darin, ohne zusätzlichen Aufwand eine für das Herstellen von Dreier-Konferenzverbindungen bereits vorhandenen Mischereinrichtungen für das Einspeisen von Hörtönen so zu benutzen, daß ein Hörton auch gezielt nur einem Teilnehmer zugesendet werden kann. Eine Vielzahl von verschiedenen Hörtönen soll dabei über eine möglichst geringe Anzahl von Verbindungszeitlagen durchgeschaltet werden können.

Diese Aufgabe wird mit einer Merkmalskombination gelöst, wie sie im Patentanspruch 1 angegeben ist.

Damit wird in vorteilhafter Weise erreicht, daß ohne zusätzlichen Aufwand die in einer Fernsprechvermittlungsanlage vorkommenden Hörtönen, wenn erforderlich auch gezielt zu nur einem Teilnehmer, angeboten werden können. Dabei werden die Möglichkeiten, Konferenzverbindungen herzustellen, nur unwesentlich eingeschränkt. Vorteilhafte Weiterbildungen der Erfindung ergeben sich aus den Unteransprüchen.

Ein Ausführungsbeispiel der Erfindung wird nachfolgend anhand von Zeichnungen näher erläutert.

Es zeigt:

Fig. 1 das Blockschaltbild einer Fernsprechvermittlungsanlage.

Fig. 2 das Prinzipschaltbild einer Mischereinrichtung.

Fig. 3 ein Impulsdiagramm für verschiedene Hörtöne.

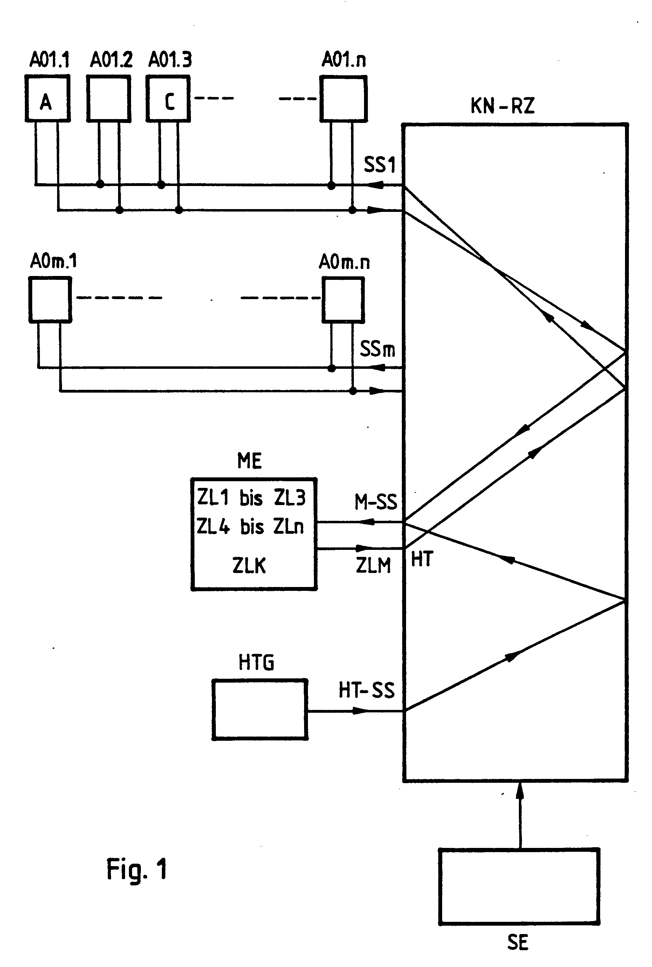

In Fig. 1 ist das Blockschaltbild einer Fernsprechvermittlungsanlage dargestellt, welche digital nach dem Zeitmultiplex-Prinzip durchschaltet. Die auszutauschenden Informationen, vorwiegend Sprachproben werden dabei nach dem bekannten PCM-Prinzip codiert übertragen. Die Anschlußorgane AO1.1 bis AOm.n sind gruppenweise an ein Koppelnetzwerk KN-RZ angeschlossen, welches nach dem Raum-Zeit-Vielfach-Prinzip aufgebaut ist. Zu den einzelnen Anschlußorgangruppen AO1 bis AOm führen digital betriebene Sammelschienen SS1 bis SSm. Auf jeder dieser Sammelschienen stehen den daran angeschlossenen Anschlußorganen AO ein verbestimmte Anzahl von Zeitlagen zur Verfügung.

Bei den meisten Fernsprechvermittlungsanlagen sind die Anschlußorgane AO mit Teilnehmerendgeräten, also mit Fernsprechapparaten beschaltet. Die Anschlußorgane AO können jedoch auch mit Verbindungsleitungen beschaltet sein, die zu anderen Fernsprechvermittlungsanlagen führen.

Für die Einkopplung von Hörtönen, aber auch für das Herstellen von Konferenzverbindungen ist an das Koppelnetzwerk KN-RZ eine Mischereinrichtung ME über eine Mischersammelschiene M-SS angeschlossen. Auf dieser Mischersammelschiene M-SS stehen der Mischereinrichtung ME eine vorbestimmte Anzahl von Mischerzeitlagen ZLM zur Verfügung. Diese Mischerzeitlagen ZLM, beispielsweise 32, teilen sich auf in Zeitlagen für Konferenzverbindungen ZLK und Zeitlagen für Hörtöne ZL1 bis ZLn.

Außerdem ist an das Koppelnetzwerk KN-RZ ein Hörtongenerator HTG über eine Hörtonsammelschiene HT-SS angeschlossen. Der Hörtongenerator HTG liefert dabei die für Hörtonfrequenzen maßgebenden Digitalworte, die dort nach dem Puls-Code-Modulations-Prinzip PCM abgelegt sind.

Für die Vergabe der Zeitlagen innerhalb des Koppelnetzwerkes KN-RZ und für die Durchschaltung der dort bestehenden räumlichen Verbindungswege ist eine Steuereinrichtung SE zuständig. Auf die Funktionen dieser Steuereinrichtung wird im folgenden nur insoweit eingegangen, wie es für das Verständnis der die Erfindung betreffenden Funktionen notwendig ist.

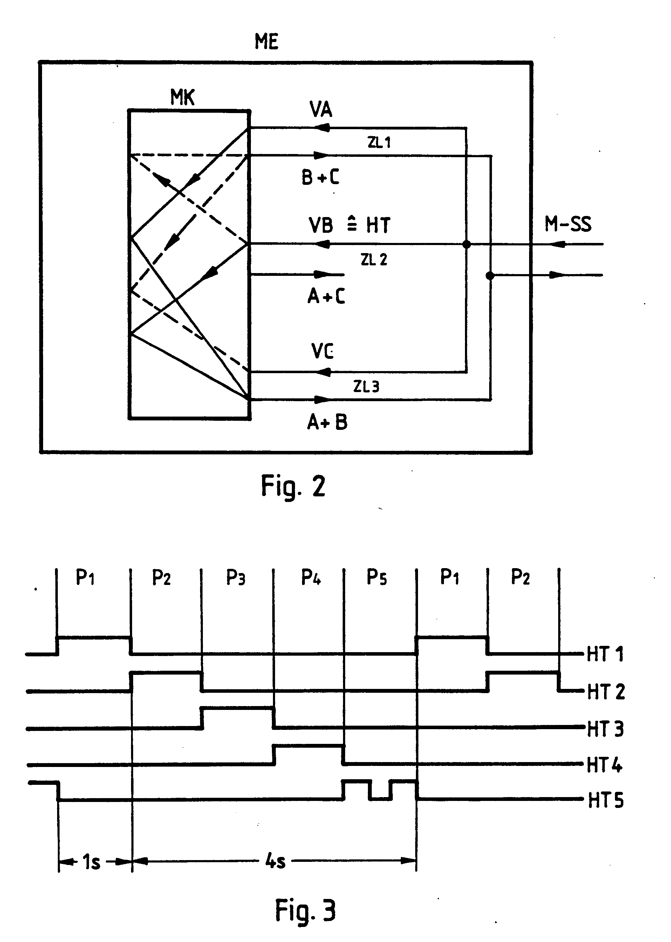

Die Fig. 2 zeigt ein Blockschaltbild der Mischereinrichtung ME selbst. Die in verschiedenen Zeitlagen ZL1, ZL2 und ZL3 liegenden Verbindungsbeziehungen sind in Fig. 2 räumlich getrennt dargestellt. Über einen Mischkoppler MK werden jeweils zwei ankommende Signalrichtungen zusammengefaßt, indem jeweils zwei PCM-Worte nach der Linearisierung addiert werden. Das dadurch neu entstandene linearisierte Summenwort wird in bekannter Weise komprimiert und gelangt jeweils auf die Senderichtung der dritten Verbindung.

An einem praktischen Beispiel soll nun beschrieben werden, wie ein Hörton zu nur einem von zwei miteinander verbundenen Teilnehmern zugesendet wird. Es sei dabei angenommen, daß eine Gesprächsverbindung zwischen den an den Anschlußorganen AO1.1 und AO1.3 angeschlossenen Teilnehmern A und C besteht. Für diese Gesprächsverbindung ist dann auf der Sammelschiene SS1 eine beliebige Zeitlage ZL belegt, worüber beide Gesprächsrichtungen dem Zeitmultiplex-Prinzip entsprechend durchgeschaltet sind.

Wenn nun beispielsweise der Teilnehmer C einen Hörton erhalten soll, so wird dies dem Verbindungszustand entsprechend durch die Steuereinrichtung SE veranlaßt. Für die Zeitdauer, in der jeweils der Hörton HT gesendet werden soll, wird jeweils innerhalb des Koppelnetzwerkes die bisherige Empfangszeitlage des Teilnehmers C abgeschaltet. Stattdessen wird ihm eine für die Hörtoneinspeisung der Mischereinrichtung ME zur Verfügung stehende Zeitlage, z.B. ZL3 zur Verfügung gestellt. Mit dem Abschalten der Empfangszeitlage des den Hörton HT empfangenden Teilnehmers C wird gleichzeitig die Sendezeitlage seines Gesprächspartners, des Teilnehmers A abgeschaltet. Dieser bekommt stattdessen eine Zeitlage, im Beispiel ZL1 zur Verfügung gestellt, die der Mischereinrichtung ME fest zugeordnet ist. Wie aus der Fig. 2 ersichtlich ist, werden die vom Teilnehmer A gesendeten Sprachprobenworte in der Zeitlage 1 über eine Verbindungsteilstrecke VA in der Mischereinrichtung ME empfangen. Zu einer anderen Zeitlage im Beispiel ZL2 empfängt die Mischereinrichtung ME über die Mischersammelschiene MSS laufend über die Verbindungsteilstrecke VB den Hörton HT. Die vom Teilnehmer A über die Verbindungsteilstrecke VA empfangenen Sprachprobenworte werden mit den digitalisierten Proben des Hörtons HT gemischt, d.h. addiert, und dem Teilnehmer C in der dritten Zeitlage ZL3 zugesendet. Beim Teilnehmer C wird daraufhin die vom Gesprächspartner A stammende Sprachinformation mit dem Hörton HT überlagert. Dieser Verbindungszustand ist in Fig. 2 innerhalb des Mischerkopplers MK mit durchgezogenen Linien dargestellt.

Für den Fall, daß bei bestimmten Verbindungszuständen ein Hörton HT eingespeist werden soll, der zu beiden Teilnehmern A und C gelangen soll, so wird auch für die andere Gesprächsrichtung eine Zeitlagenumschaltung vorgenommen. Für die Zeitdauer der Aussendung des Hörtons HT wird dann auf der anderen Gesprächsrichtung die Zeitlage ZL1 und die Zeitlage ZL3 zugeteilt. Im Mischerkoppler MK wird daraufhin das vom Teilnehmer C über die Verbindungsteilstrecke VC ankommende Sprachsignal mit dem über die Verbindungsteilstrecke VB ankommenden Hörton- PCM-Worten gemischt, so daß auch der andere Teilnehmer A den Hörton HT empfangen kann. Diese Verbindungsbeziehungen sind in Fig. 2 innerhalb des Mischerkopplers MK gestrichelt dargestellt.

Ein weiterer Ausgang des Mischerkopplers MK, der in der Zeichnung A + C bezeichnet ist, wird bei der Hörtoneinkopplung nicht benötigt. Er ist deshalb in jeweils der Zeitlage, im Beispiel ZL2 inaktiv, in der der Hörton HT vom Hörtongenerator HTG ankommt. Falls wie zuvor beschrieben ist, der Hörton HT nur in eine Gesprächsrichtung eingekoppelt wird, so ist auch jeweils die eine oder die andere Empfangsrichtung VA oder VC innerhalb der Mischereinrichtung ME nicht aktiv. In diesem Fall werden vom Hörtongenerator aus die betreffenden Zeitlagen zur Mischereinrichtung ME durchgeschaltet, wobei der Hörtongenerator HTG PCM-Worte sendet, die einen Nullpegel darstellen. Damit soll vermieden werden, daß auf den Sammelschienen unerwünschte Geräuscheffekte entstehen.

Da für jede Einkopplung eines bestimmten Hörtons HT eine aus drei Zeitlagen bestehende Zeitlagengruppe, beispielsweise ZL1 bis ZL3 zur Verfügung stehen muß, würde die Verkehrsleistung einer Fernsprechvermittlungsanlage stark eingeschränkt, wenn sehr viele Zeitlagen für die Einkopplung einer Vielzahl von verschiedenartigen Hörtönen verloren gingen. Deshalb sieht die Erfindung außerdem vor, daß verschiedene Hörtonphasen P1 bis P5 eingerichtet werden, wie dies in Fig. 3 dargestellt ist. Die Einteilung dieser Phasen P hängt natürlich davon ab, wie groß der Abstand zwischen zwei Tönen bei einem ganz bestimmten Hörton z.B. HT1 ist. Wenn also, wie in Fig. 3 dargestellt, der Ton jeweils eine Sekunde dauert und der Abstand vier Sekunden beträgt, so können bis zu fünf Phasen gebildet werden. Die einzelnen Hörtöne, in diesem Falle HT1 bis HT5 können dann über die gleiche Zeitlagengruppe, im Beispiel ZL1 bis ZL3 gesendet werden und haben jeweils eine unterschiedliche Bedeutung. So kann es sich beispielsweise beim einen Hörton HT1 um einen Anklopfton handeln, der dem betreffenden Teilnehmer signalisiert, daß eine weitere Verbindung auf ihn wartet. Einem anderen Hörton HT2 könnte die Bedeutung zugewiesen sein, daß es sich um einen Aufmerksamkeitston handelt, der signalisiert, daß bei einer nachtgeschalteten Teilnehmerstelle weitere ankommende Anrufe vorliegen. Bei einem weiteren Hörton HT3 könnte es sich um einen Aufschalteton handeln. Um die unterschiedliche Bedeutung solcher Hörtöne HT den Teilnehmern deutlich zu machen, können sich die einzelnen Hörtöne, im Beispiel HT1 bis HT5 dadurch unterscheiden, daß sie verschiedene Frequenzen haben. Die Tonsendung kann jedoch auch unterbrochen werden, wie dies bei einem der Hörtöne HT5 dargestellt ist.

Da eine Zeitlagenumschaltung während einer bestehenden Gesprächsverbindung nur dann vorgenommen wird, wenn tatsächlich ein Hörton HT gesendet werden soll, und die Gesprächsverbindung jeweils während der Pausen, im Beispiel vier Sekunden, jeweils in ihren ursprünglichen Zustand zurückkehrt, können die gleichen Zeitlagen, im Beispiel ZL1 bis ZL3 der Mischereinrichtung ME während dieser Pausen für andere Verbindungen genutzt werden. In diesem Fall wird durch die Steuereinrichtung SE bei der Verbindung des Hörtongenerators HTG mit der Mischereinrichtung ME eine Zeitlagenumschaltung dergestalt vorgenommen, daß bei Bedarf ein anderer Hörton, z.B. HT2 über die der Mischereinrichtung ME zugeordnete Zeitlage, im Beispiel ZL2 zur Mischereinrichtung ME geschaltet wird. Die Steuereinrichtung SE schaltet also der jeweiligen Phase P1 bis P5 entsprechend einen der Hörtöne HT1 bis HT5 zur Mischereinrichtung.

Wenn also der Mischereinrichtung ME drei Zeitlagengruppen, z.B. ZL1 bis ZL3, zu je drei Zeitlagen, also insgesamt neun Zeitlagen, zur Verfügung gestellt werden, so lassen sich dem beschriebenen Beispiel entsprechend insgesamt fünfzehn verschiedene Hörtonarten im Koppelnetzwerk KN-RZ durchschalten, wenn eine zeitliche Verschachtelung, wie sie in Fig. 3 dargestellt ist, möglich ist.

## Ansprüche

1. Verfahren zum Einspeisen von Hörtönen in bestehende Gesprächsverbindungen bei einer Fernsprechvermittlungsanlage, welche ein digital nach dem Zeitmultiplex-Prinzip durchschaltendes Raumvielfach-Koppelfeld aufweist, womit Zeitlagenumsetzungen für alle Verbindungen durchführbar sind, und wobei eine Mischereinrichtung vorgesehen ist, um mehr als zwei Teilnehmer an eine Verbindung anzuschalten, dadurch gekennzeichnet, daß von den der Mischereinrichtung (ME) für die Herstellung von Dreier- und/oder Mehrfachkonferenzverbindungenzur Verfügung stehenden Zeitlagen (ZLM) einige Zeitlagen (ZL1 bis ZLn) fest dafür vergeben sind, Hörtöne (HT) über die Mischereinrichtung (ME) gezielt zu einem Teilnehmer (C) zu senden, und daß in den Pausen eines Hörtones (HT) ein gleichartiger oder anderer Hörton (HT) mit gleichem Rhythmus in andere Verbindungen über dieselben Mischerzeitlagen (z.B. ZL1 bis ZL3) eingespeist werden kann.

2. Verfahren nach Anspruch 1, dadurch gekennzeichnet, daß für jede Hörtonart eine Gruppe von jeweils drei Zeitlagen (z.B. ZL1 bis ZL3) vorgesehen ist, wie dies auch für ein Dreiergespräch erforderlich ist.

3. Verfahren nach Anspruch 2, dadurch gekennzeichnet, daß in jeder Zeitlagengruppe (z.B. ZL1 bis ZL3) so viele Verbindungen mit gleichen oder verschiedenartigen Hörtönen (HT) beaufschlagt werden können, wie Phasen (P1 bis P5) vorhanden sind.

4. Verfahren nach Anspruch 1, dadurch gekennzeichnet, daß die Hörtöne sich durch ihre Frequenzen voneinander unterscheiden.

5. Verfahren nach Anspruch 4, dadurch gekennzeichnet, daß Frequenzgemische als Hörtöne (HT) vorgesehen sind.

6. Verfahren nach Anspruch 1,
dadurch gekennzeichnet,
daß die jeweilige Tonsendung rhythmisch unterbrochen oder verändert wird.

7. Verfahren nach Anspruch 1,
dadurch gekennzeichnet,
daß von einem Hörtongenerator (HTG) gelieferte, einen Nullpegel darstellende PCM-Worte an unbenutzte Verbindungsteilstrecken (VA oder VC) angeschaltet werden.

8. Verfahren nach Anspruch 1,
dadurch gekennzeichnet,
daß je nachdem, ob nur ein Teilnehmer (z.B. C) oder beide in einer Gesprächsverbindung zusammengeschaltete Teilnehmer (z.B. A und C) einen Hörton (HT) erhalten, entweder nur eine Gesprächsrichtung oder beide Gesprächsrichtungen auf die Mischer-Zeitlagen (z.B: ZL1 bis ZL3) umgeschaltet werden.

Fig. 1

ME

MK

VA

ZL1

B + C

VB ≙ HT

M−SS

ZL 2

A + C

VC

ZL3

A + B

**Fig. 2**

P₁  P₂  P₃  P₄  P₅  P₁  P₂

HT 1

HT 2

HT 3

HT 4

HT 5

1s  4s

**Fig. 3**

TELENORMA, TN
P 4112